(19)

Europäisches
Patentamt
European
Patent Office
Office européen
des brevets

(11)  **EP 2 609 966 A1**

(12)  **EUROPEAN PATENT APPLICATION**
published in accordance with Art. 153(4) EPC

(43) Date of publication:
**03.07.2013  Bulletin 2013/27**

(21) Application number: **11819761.5**

(22) Date of filing: **03.08.2011**

(51) Int Cl.:
*A62B 18/02* (2006.01)      *A62B 7/10* (2006.01)
*B01D 39/16* (2006.01)      *D04H 1/72* (2012.01)
*D21H 13/24* (2006.01)      *D21H 15/02* (2006.01)
*D21H 27/08* (2006.01)

(86) International application number:
**PCT/JP2011/067760**

(87) International publication number:
**WO 2012/026297 (01.03.2012 Gazette 2012/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2010  JP 2010186867**

(71) Applicants:
• **Shigematsu Works Co., Ltd.
Kita-ku,
Tokyo 114-0024 (JP)**
• **Teijin Fibers Limited
Osaka-shi, Osaka 541-0054 (JP)**

(72) Inventors:
• **INAGAKI, Kenji
Ibaraki-shi
Osaka 567-0006 (JP)**
• **INAI, Meguru
Saitama-shi
Saitama 339-0046 (JP)**

• **HONDA, Miho
Saitama-shi
Saitama 339-0046 (JP)**
• **KURANO, Norikazu
Saitama-shi
Saitama 339-0046 (JP)**
• **OOHIRA, Masahiro
Tamura-shi
Fukushima 963-4312 (JP)**
• **SATO, Ryoichi
Tamura-shi
Fukushima 963-4312 (JP)**

(74) Representative: **Hallybone, Huw George
Carpmaels & Ransford
One Southampton Row
London
WC1B 5HA (GB)**

(54)  **FILTER FOR MASKS AND PRODUCTION METHOD THEREOF, AS WELL AS MASK FOR PARTICLE CAPTURE**

(57)      An aspect of the present invention relates to a mask filter, wherein wet nonwoven fabric comprised of synthetic fiber is folded up into a concentric circular pleat form, and the synthetic fiber comprises 10 to 50 mass percent of short fiber A having a fiber length ranging from 0.1 to 1 mm and a fiber diameter ranging from 100 to 1,000 nm, and further comprises binder fiber B having a fiber length ranging from 5 to 10 mm and a fiber diameter ranging from 6 to 15 μm, and fiber C of greater fiber length and fiber diameter than short fiber A and smaller fiber length and fiber diameter than binder fiber B.

[Fig.1]

EP 2 609 966 A1

**Description**

Cross-reference to related applications

This application claims the benefit of priority to Japanese Patent Application No. 2010-186867 filed on August 24, 2010, which is expressly incorporated herein by reference in its entirety.

Technical field

The present invention relates to a mask filter and to a method of manufacturing the same. More particularly, the present invention relates to a mask filter affording both good particle filtration efficiency and low pressure loss, and to a wet method of manufacturing the above filter.
The present invention further relates to a mask for trapping particles equipped with the above filter.

Background art

In addition to sheet-like filters, filters with wave-shaped and concentric circular pleats are known as the filters used in particle-trapping masks such as dust masks. Among them, filters having concentric circular pleats afford desirable characteristics, such as high particle filtration efficiency and low pressure loss, as the filters of particle-trapping masks.

Conventionally, from the perspective of suitability to manufacturing, filters having concentric circular pleats described above have been manufactured out of glass fiber, as described in Japanese Examined Patent Publication (KOKOKU) Showa No. 55-47929, which is expressly incorporated herein by reference in its entirety. However, glass fiber is polydisperse and nonuniform in terms of fiber diameter and fiber length. Thus, a complex performance-adjusting step is required to obtain a filter of constant particle filtration efficiency and airflow resistance from glass fiber.

In contrast, wet nonwoven fabric of synthetic fiber that can be used as a filter material in masks has been proposed in recent years (for example, see WO2008/130019A1 or English language family member US2010/0133173A1, which are expressly incorporated herein by reference in their entirety). The use of synthetic fiber makes it possible to readily achieve uniform fiber diameter and fiber length. Thus, the use of synthetic fiber permits the stable supplying of high-quality filters. Among synthetic fibers, short fibers such as those described in WO2008/130019A1 (so-called "nanofibers") afford good sheet-forming properties, and are thus suitable as materials for obtaining filters by wet methods.

Accordingly, the present inventors attempted to manufacture a filter having concentric circular pleats in which a wet nonwoven fabric comprised of synthetic fibers containing nanofibers was folded up. As a result, difficulty was encountered in obtaining a filter having pleats of desired shape, and in some cases, no filter could be manufactured at all.

Summary of the invention

An aspect of the present invention provides for a filter made of wet nonwoven fabric comprised of synthetic fibers and having concentric circular pleats.

The present inventors conducted extensive research into obtaining the above filter, resulting in the discovery that by combining prescribed synthetic fibers, it was possible to obtain a filter made of wet nonwoven fabric comprised of synthetic fibers that was folded up into a concentric circular pleat form. The present invention was devised on that basis.

An aspect of the present invention relates to:

a mask filter, wherein wet nonwoven fabric comprised of synthetic fiber is folded up into a concentric circular pleat form, and
the synthetic fiber comprises:

10 to 50 mass percent of short fiber A having a fiber length ranging from 0.1 to 1 mm and a fiber diameter ranging from 100 to 1,000 nm,

and further comprises:

binder fiber B having a fiber length ranging from 5 to 10 mm and a fiber diameter ranging from 6 to 15 $\mu$m, and fiber C of greater fiber length and fiber diameter than short fiber A and smaller fiber length and fiber diameter than binder fiber B.

The above synthetic fiber can comprise 50 to 90 mass percent of a total quantity of binder fiber B and fiber C.

The mask filter can have a DOP particle filtration efficiency of equal to or greater than 80 percent and a pressure loss of equal to or less than 300 Pa.

The mask filter can have a mass per unit area of 80 to 180 g/m$^2$.

The mask filter can have a filter thickness ranging from 0.4 to 1.5 mm, a pleat height ranging from 5 to 30 mm, a pleat outer diameter at the outermost circumference position ranging from 50 to 120 mm, and a total number of pleats ranging from 6 to 15.

The mask filter can have a total weight ranging from 2 to 12 g.

The short fiber A can be a polyester fiber.

The binder fiber B can be a core-in-sheath composite fiber with a core portion of polyethylene terephthalate and a sheath portion of copolymer polyester.

The fiber C can be a polyester fiber.

A further aspect of the present invention relates to:

a method of manufacturing the above mask filter, which comprises folding up the nonwoven fabric into a concentric circular pleat form while in a wet state.

A still further aspect of the present invention relates to:

a particle-trapping mask comprising the above mask filter.

The present invention permits the manufacturing by a wet method of a mask filter of a concentric circular pleat form affording good particle filtration efficiency and low pressure loss.

Brief description of drawings

[Fig. 1] Fig. 1 is a perspective view of an example of the mask filter of the present invention.
[Fig. 2] Fig. 2 shows an example of the mask of the present invention.

Modes for carrying out the invention

The present invention relates to a mask filter in which wet nonwoven fabric comprised of synthetic fiber is folded up into a concentric circular pleat form (also referred to hereinafter as a "mask filter" or "filter"). In the mask filter of the present invention, the synthetic fiber comprises of 10 to 50 mass percent of short fiber A having a fiber length ranging from 0.1 to 1 mm and a fiber diameter ranging from 100 to 1,000 nm, and further comprises binder fiber B having a fiber length ranging from 5 to 10 mm and a fiber diameter ranging from 6 to 15 $\mu$m, and fiber C of greater fiber length and fiber diameter than short fiber A and smaller fiber length and fiber diameter than binder fiber B.

As set forth above, when the present inventors attempted to manufacture a filter having concentric circular pleats by folding up wet nonwoven fabric made of synthetic fiber comprising nanofibers, they found that it was difficult to obtain a filter having pleats of desired shape and that in some cases, no filter could be manufactured at all. This point will be described in greater detail. In the course of wet manufacturing a filter having concentric circular pleats, synthetic fibers that had been subjected to a sheet-forming process (nonwoven fabric) were folded up into concentric circular pleats with a folding machine while wet, dried, and subsequently removed from the folding machine to obtain a filter. However, the synthetic fiber containing the nanofibers was difficult to separate from the sheet-forming machine. When an attempt was made to remove the filter from the folding machine after drying, a phenomenon occurred whereby a portion of the material stuck to the folding machine during separation. Thus, it was difficult to obtain a filter of desired shape.

The present inventors conducted further extensive research to discover the reason behind the above phenomenon. As a result, they found that it was difficult to ensure the thickness and strength of minute nanofibers, and attributed the above phenomenon thereto. Accordingly, the present inventors conducted further extensive research based on the above knowledge, resulting in the discovery that by combining prescribed synthetic fibers with the nanofibers, it was possible to obtain a filter having concentric circular pleats of desired shape by a wet method. The present invention was devised on that basis.

The mask filter of the present invention will be described in greater detail below.

Short fiber A

In the synthetic fiber included in the filter of the present invention, 10 to 50 mass percent of the fiber is a short fiber A having a fiber length ranging from 0.1 to 1 mm and a fiber diameter ranging from 100 to 1,000 nm. When the fiber diameter of short fiber A is greater than 1,000 nm, the diameter of the holes that are present on the outer surface becomes nonuniform (that is, the ratio of the average hole diameter to the maximum hole diameter becomes large), compromising filter performance. At less than 100 nm, the fibers tend to drop out of the sheet-forming machine during sheet-forming, and it becomes difficult to obtain a filter of uniform thickness. Further, when the fiber length of short fiber A exceeds 1 mm, the fibers tend to become entangled and dispersion decreases during sheet-forming, making it difficult to obtain a filter of uniform thickness. When the fiber length of short fiber A is less than 0.1 mm, the grip between individual fibers becomes extremely weak, making it difficult to move the nonwoven fabric from the sheet-forming machine to the folding machine. Further, from the perspective of filter moldability, the ratio of the fiber length L to the fiber diameter D (L/D) desirably falls within a range of 100 to 2,500, preferably within a range of from 500 to 2,000.

In this context, the fiber diameter referred to in the present invention can be measured by photographing the fiber cross-section at a magnification of 30,000-fold by a transmission electron microscope (TEM), and the fiber length that is referred to can be measured by observing a fiber that has been placed on a base at a magnification of 20 to 500-fold by a scanning electron microscope (SEM). In these processes, TEM and SEM devices with length-measuring functions can be utilized to measure the fiber length and fiber diameter. For TEM and SEM devices without length-measuring functions, it suffices to make an enlarged copy of a photograph that has been taken and measure the fiber diameter and fiber length with a ruler adapted to the scale involved.

In this process, when the cross-sectional shape of a single fiber is a different shape from a round shape, the diameter of a circle circumscribed onto the cross-section of the single fiber is employed as the fiber diameter. In the present invention, the terms "fiber diameter" and "fiber length" refer to the average of the values measured for five fibers.

Because the filter of the present invention is made of synthetic fibers, short fiber A is selected from among synthetic fibers. Examples of the synthetic fiber included in short fiber A are polyamide fibers, polyester fibers, and polyolefin fibers. Desirable examples of polyester fibers are polyethylene terephthalate, polytrimethylene terephthalate, polybutylene terephthalate, and polyethylene naphthalate; and copolymers of the above as primary repeating units with aromatic dicarboxylic acids such as isophthalic acid and 5-sulfoisophthalic acid metal salts, aliphatic dicarboxylic acids such as adipic acid and sebacic acid, hydroxycarboxylic acid condensates such as ε-caprolactam, and glycol components such as diethylene glycol, trimethylene glycol, tetramethylene glycol, and hexamethylene glycol. Desirable examples of polyamide fibers are aliphatic polyamides such as Nylon 6 and Nylon 66. Desirable examples of polyolefin fibers are high-density polyethylene, medium density polyethylene, high-pressure method low-density polyethylene, linear low-density polyethylene, isotactic polypropylene, ethylene-propylene copolymers, and ethylene copolymers of vinyl monomers such as maleic anhydride. Of these, from the perspective of filter moldability, polyester fibers are desirable. Polyester fibers selected from the group consisting of polyethylene terephthalate, polytrimethylene terephthalate, polybutylene terephthalate, polyethylene terephthalate isophthalate with an isophthalic acid copolymerization rate of equal to or more than 20 mol percent, and polyethylene naphthalate are desirable. So long as the above-stated size is satisfied, one type of synthetic fiber can be used, or two or more types of synthetic fibers can be combined for use as short fiber A. Commercially available products can also be employed as short fiber A. For example, Nanofront (registered trademark) made by Teijin Fiber is a polyester fiber that can be suitably employed as short fiber A in the present invention.

From the perspective of fiber diameter and uniformity of fiber diameter, a composite fiber -- having an island-sea structure comprising an island component comprised of a fiber-forming thermoplastic polymer with an island diameter of 100 to 1,000 nm and a sea component enclosing the island component -- that is cut and from which the island component is then dissolved away is desirably employed as short fiber A. The island diameter can be measured by photographing the cross-section of a single composite fiber by a transmission electron microscope. When the shape of the island cross-section is a different shape from a round shape, the island diameter refers to the diameter of circle circumscribed onto it.

The sea component is desirably comprised of a polymer (referred to as a "readily alkali solution-soluble polymer", hereinafter) that is more readily soluble in an alkali solution than the fiber-forming thermoplastic polymer included in the island component. This makes it possible to remove the sea component by treatment with an alkali. From the perspective of separation of the island, the ratio of the dissolution rate of the readily alkali solution-soluble polymer to that of the fiber-forming thermoplastic polymer forming the island component (the ratio of their dissolution rates in the alkali solution employed to remove the sea component) is desirably equal to or more than 200, preferably falling in a range of 300 to 3,000. For details regarding the sea component, island component, composite fiber, and method of manufacturing the same, reference can be made to WO2008/130019A1, page 4, line 21 to page 8, line 24.

In the filter of the present invention, when the proportion of short fiber A to the total quantity of synthetic fiber is less than 10 mass percent, the fiber obtained performs poorly. At greater than 50 mass percent, the excessive proportion of short fiber A in the filter makes it difficult to achieve an effect by combining binder fiber B and fiber C and increases the airflow resistance, rendering the filter unsuitable for use as a mask filter. To achieve the stable production of filters affording good filter performance, the above proportion is desirably 20 to 45 mass percent.

Binder fiber B

Short fiber A is employed primarily to achieve filter performance. However, because it is so fine, it compromises the sheet-forming property when employed alone. Accordingly, in the present invention, binder fiber B is admixed to the filter primarily to enhance the sheet-forming property. Binder fiber B is a synthetic fiber having a fiber length ranging from 5 to 10 mm and a fiber diameter ranging from 6 to 15 $\mu$m. At either a fiber diameter of less than 6 $\mu$m or at a fiber length of less than 5 mm, a large amount of the fiber component drops out during the sheet-forming step, making it impossible to obtain a filter of adequate strength. When either the fiber diameter exceeds 15 $\mu$m or the fiber length exceeds 10 mm, it becomes impossible to obtain a filter that performs well. From the perspective of filter performance, the fiber diameter desirably falls within a range of 6 to 13 $\mu$m and the fiber length desirably falls within a range of 5 to 7 mm. So long as the above size is satisfied, a single type of synthetic fiber can be used or two or more different types of synthetic fibers can be combined for use as binder fiber B.

Either an unstretched or composite fiber is desirably employed as the synthetic fiber included in binder fiber B. When employing binder fiber B comprised of an unstretched fiber, a thermocompression step is required after drying following sheet-forming. Thus, at least calendering or embossing is desirably carried out following sheet-forming. For details regarding unstretched fibers that can be used to constitute binder fiber B, reference can be made to WO2008/130019A1, page 9, lines 6 to 12.

Additionally, when binder fiber B is a composite fiber, it is desirably a core-in-sheath composite fiber, comprised of a core portion and a sheath portion, that is of suitable strength and flexibility. From the perspective of the strength of the fiber obtained, a core-in-sheath composite fiber -- in which a polymer component that achieves an adhesive effect by fusing when subjected to a heat treatment following sheet-forming is employed as the sheath portion and another polymer with a melting point 20°C or more higher than that of the above polymer is employed as the core portion -- is desirable as the core-sheath composite fiber. Binder fiber B can also be a side-by-side composite fiber, eccentric core-in-sheath composite fiber, core-in-sheath composite fiber, or the like in which a binder component (low-melting-point component) constitutes part or all of the surface of the single fiber.

A copolymer polyester is desirable and an amorphous copolymer polyester is preferred as the polymer component constituting the sheath portion. Specific examples thereof are random or block copolymers of a component in the form of an acid such as terephthalic acid, isophthalic acid, 2,6-naphthalenedicarboxylic acid, 5-sulfoisophthalic acid sodium, adipic acid, sebacic acid, azelaic acid, dodecanoic acid, or 1,4-cyclohexane dicarboxylic acid and a component in the form of a diol such as ethylene glycol, 1,3-propanediol, 1,4-butanediol, 1,5-pentanediol, 1,6-hexanediol, diethylene glycol, 1,4-cyclohexanediol, or 1,4-cyclohexane dimethanol. Of these, a copolymer polyester, that has been widely employed and is obtained with a principal component in the form of terephthalic acid, isophthalic acid, ethylene glycol, and diethylene glycol, is desirable in terms of cost. Copolymer polyesters with glass transition temperatures falling within a range of 50 to 100°C and not exhibiting clear crystalline melting points are desirable as the above copolymer polyester. Additionally, examples of the polymer included in the core portion are various polyesters such as polyethylene terephthalate, polytrimethylene terephthalate, and polybutylene terephthalate. Of these, from the perspective of the performance of the filter obtained, an example of a preferred binder fiber B is a core-in-sheath composite fiber in which the core portion is polyethylene terephthalate and the sheath portion is a copolymer polyester.

Fiber C

The short fiber A is employed primarily to achieve filter performance and binder fiber B is employed primarily to achieve good sheet-forming property. Mixing in fiber C that is of greater fiber length and fiber diameter than short fiber A and smaller fiber length and fiber diameter than binder fiber B makes it possible to obtain a mask filter that affords both good particle filtration efficiency and low pressure loss by folding up the synthetic fibers containing the short fibers into a concentric circular pleat form. In contrast, when a mask filter is fabricated by forming fiber A alone, or a mixture of fiber A and fiber B, into a sheet and folding up it into a concentric circular pleat form, separation or sticking occurs in the process of removal from the sheet-forming machine or folding machine, making it difficult to obtain a filter of desired shape. To obtain a filter of desired shape, fiber C with a fiber diameter of greater than 1 $\mu$m and less than 7 $\mu$m and with a fiber length of equal to or more than 2 mm but less than 5 mm is desirably employed, and one with a fiber diameter of equal to or more than 2 $\mu$m and equal to or less than 5.5 $\mu$m and with a fiber length of equal to or more than 2 mm and equal to or less than 4 mm is preferably employed.

The fiber C is not specifically limited other than that it be a synthetic fiber of the above-stated size. From the perspective of filter moldability and the like, polyamide fibers, polyester fibers, polyolefin fibers, and the like are desirable. Of these, polyester fibers are preferred. Examples of polyester fibers are those given by way of example for short fiber A above. In particular, the use of fiber C in the form of a polyester fiber is desirable from the perspective of filter performance when short fiber A is a polyester fiber. One type of synthetic fiber can be employed, or two or more different types of synthetic fibers can be employed, as fiber C.

The proportion of fibers other than short fiber A, that is, the proportion of the total quantity of binder fiber B and fiber C, desirably constitutes 50 to 90 mass percent, preferably 55 to 80 mass percent, of the synthetic fibers included in the filter of the present invention. Employing fiber B and fiber C within the stated range makes it possible to achieve a good effect by using the two fibers in combination with short fiber A. From the perspective of further enhancing the effect achieved by using both binder fiber B and fiber C, the proportion of the synthetic fiber accounted for by binder fiber B is desirably 30 to 60 mass percent, and the proportion accounted for by fiber C is desirably 15 to 45 mass percent.

The method of manufacturing a mask filter of the present invention will be described next.

The mask filter of the present invention can be manufactured by forming a sheet out of synthetic fibers in the form of a mixture of short fiber A, binder fiber B, and fiber C and folding up the sheet into a concentric circular sheet form. Specifically, the synthetic fibers are dispersed in a solvent (normally water) to prepare a slurry, the slurry that has been prepared is formed into a sheet with a sheet-forming machine, and then, while still wet, the nonwoven fabric is transferred to a folding machine and folded. Subsequently, the filter that has been folded up in the folding machine is received in a receiving can. The filter is discharged from the receiving can and dried in a drying machine to obtain a mask filter that has been folded up into a concentric circular pleat form.

The slurry can be prepared by known methods using the above synthetic fibers. Water is normally employed as the solvent. As needed, additives such as dispersing agents and antifoaming agents can also be employed.

Any sheet-forming machine that is normally employed to manufacture wet nonwoven fabric can be employed without limitation. The shape and size of the folding machine that folds up the nonwoven fabric that is transferred from the sheet-forming machine can be determined based on the desired mask shape and size. When the sheet-forming machine is positioned over the folding machine following sheet-forming, the wet nonwoven fabric covering the walls in the interior of the sheet-forming machine can be adhered to the folding machine to cover the outer surface of the folding machine with the nonwoven fabric. Here, the nonwoven fabric is wet and fluid, and will thus adhere to the outer surface of the folding machine in close conformity to the outer surface shape of the folding machine.

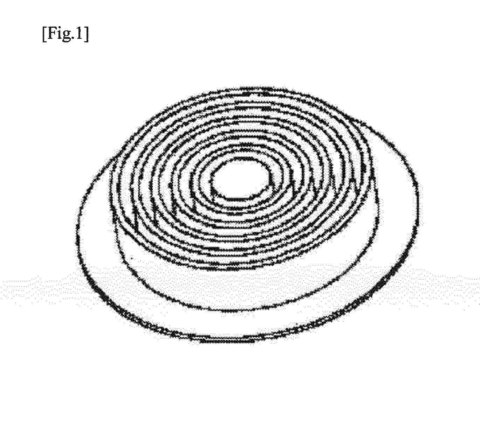

Subsequently, the folding machine, the outer surface of which has been covered by the wet nonwoven fabric, folds up. For example, using a folding machine of cylindrical shape that is capable of folding up in nested fashion, it is possible to fold up the wet nonwoven fabric into concertinas. Subsequently, the wet mask filter is received from the folding machine by the receiving can and transferred to the drying machine. The wet mask filter is desirably discharged from the receiving can into a drying machine and dried to obtain a mask filter of desired shape. Fig. 1 (a perspective view) shows an example of a mask filter thus formed.

The mask filter that has been obtained by the above steps is folded up into a concentric circular pleat shape, and thus affords high particle filtration efficiency and a low pressure loss. Specifically, the present invention can achieve a filter performance in the form of a DOP (dioctyl phthalic acid) particle filtration efficiency of equal to or higher than 80 percent (further, equal to or higher than 90 percent, and desirably, 95 percent to 100 percent), and a pressure loss of equal to or less than 300 Pa (further equal to or less than 250 Pa, desirably 50 to 220 Pa). In the present invention, the phrases "DOP particle filtration efficiency" and "pressure loss" refer to values measured by the methods described in Examples further below.

An example of a desirable filter shape in terms of achieving the above filter performance is one in which the filter thickness falls within a range of 0.4 to 1.5 mm, the pleat height falls within a range of 5 to 30 mm, the outer diameter of the pleat at the outermost circumference position falls within a range of 50 to 120 mm, and the total number of pleats falls within a range of 6 to 15. The shape can be adjusted by means of the slurry concentration, shape of the folding machine, and manufacturing conditions. As set forth above, it is difficult to obtain a filter of desired shape without combining fibers A to C. In contrast, in the present invention, the synthetic fiber combining the above multiple fibers is employed to obtain a filter of the above-described desired shape. It is also desirable for the total mass of the filter to fall within a range of 2 to 12 g and for the mass per unit area to fall within a range of 80 to 180 $g/m^2$ when applied to a mask. In the present invention, the term "mass per unit area" is a value measured according to JIS P8124 (Paper-Determination of grammage), and the filter thickness is a value measured according to JIS P8118 (Paper and board-Determination of thickness and density).

The mask filter of the present invention as set forth above is suited to various mask filters used in particle-trapping applications such as dust masks. That is, the present invention also relates to a particle-trapping mask comprising the mask filter of the present invention. The mask of the present invention is suited to replaceable dust masks, and the filter of the present invention can be employed as a replaceable filter.

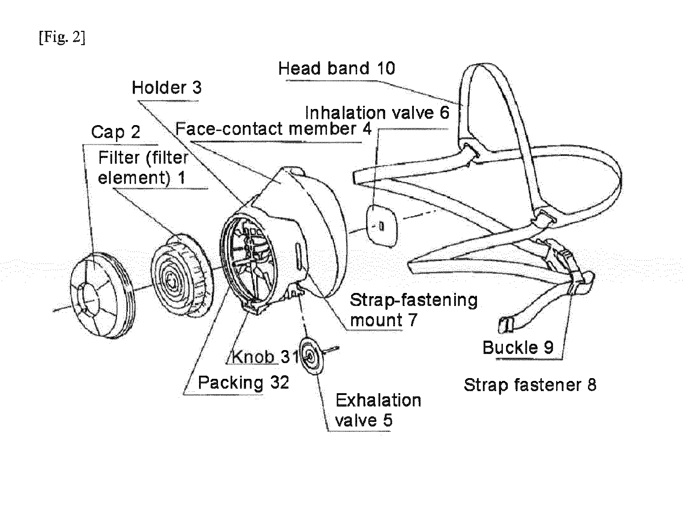

Fig. 2 shows an example of the mask of the present invention. The dust mask shown in Fig. 2 is comprised of, at a center thereof, a filter element 1 in the form of the filter of the present invention, a cap 2 positioned to the outside thereof, and a holder 3 positioned to the inside thereof, thereby constituting an integrated filter member. On this filter member are mounted a face-contact member 4, an exhalation valve 5, and an inhalation valve 6, thereby constituting the mask main body. The packing 32 of holder 3 plays the role of enhancing the tightness of fit. Strap fastener 8 is mounted through the strap-fastening mount 7 of holder 3 to constitute a dust mask. When wearing the dust mask, it suffices to mount the head band 10 of strap fastener 8 on the head and adjust the length of the strap fastener with buckle 9. In the dust mask shown in Fig. 2 in the form of a replaceable dust mask, pressing knob 31 of holder 3 to release cap 2 permits replacement of filter element 1.

The present invention further relates to a method of manufacturing the mask filter of the present invention. The manufacturing method of the present invention is characterized by folding up the nonwoven fabric into a concentric circular pleat form while in a wet state. The details of the manufacturing method of the present invention are as set forth above. According to the present invention, the synthetic fibers with the above combination can be used to obtain a mask filter in which wet nonwoven fabric containing short fibers is folded up into a concentric circular pleat form.

EXAMPLES

The present invention will be further described below through Examples. However, the present invention is not limited to the embodiments shown in Examples.

The synthetic fibers employed in Examples and Comparative Examples were as follows. The fiber diameters indicated below are values (average values, n=5) measured by photographing a fiber cross section at 30,000-fold magnification by a transmission electron microscope (TEM with a length-measuring function). The fiber diameters referred to herein are the diameters of circles circumscribed onto single fiber cross-sections. The fiber lengths are values (average values, n=5) measured at a magnification of 20 to 500-fold with the fiber being measured having been positioned on a base.

Short fiber A-1: Polyethylene terephthalate fiber (Nanofront (registered trademark) made by Teijin Fiber) with a fiber diameter of 703 nm and a fiber length of 0.8 mm

Fiber B-1: Core-in-sheath composite fiber (core portion: polyethylene terephthalate; sheath portion: copolymer polyester) with a fiber diameter of 6.8 $\mu$m and a fiber length of 5 mm

Fiber B-2: Core-in-sheath composite fiber (core portion: polyethylene terephthalate; sheath portion: copolymer polyester) with a fiber diameter of 10.1 $\mu$m and a fiber length of 5 mm

Fiber B-3: Core-in-sheath composite fiber (core portion: polyethylene terephthalate; sheath portion: copolymer polyester) with a fiber diameter of 12.5 $\mu$m and a fiber length of 5 mm

Fiber C-1: Polyethylene terephthalate fiber with a fiber diameter of 2.4 $\mu$m and a fiber length of 3 mm

Fiber C-2: Polyethylene terephthalate fiber with a fiber diameter of 5.2 $\mu$m and a fiber length of 3 mm

Glass fiber: Glass fiber with a fiber diameter of 0.5 to 1.80 $\mu$m

[Examples 1 to 9]

Thirty filters were fabricated by the following method.

A quantity of short fiber A-1 corresponding to 30 filters was weighed out and charged to a vessel. A dispersing agent (DT-100, made by Momentive Performance Materials, Inc. (Japan)) was added, after which water was gradually added. A defoaming agent (TSA-730, made by GE Toshiba Silicones Co., Ltd.) was then added and slurry 1 was prepared. The concentration of dispersing agent in slurry 1 was about 1.4 mass percent. The concentration of defoaming agent was about 0.7 mass percent. The concentration of the solid component in slurry 1 was about 6.4 mass percent. Separately, quantities corresponding to 30 filters of the fiber corresponding to fiber B and the fiber corresponding to fiber C shown in Table 1 were weighed out, charged to a vessel, mixed, and divided into 30 equal portions, each of which was charged to a separate vessel. Slurry 1 was divided into 30 equal portions, each of which was separately charged to one of the vessels, suitable quantities of water were added, and the mixtures were stirred with mixers to prepare a slurry 2. The concentration of the solid component of slurry 2 was about 0.3 to 0.6 mass percent.

The slurry 2 that had been thus prepared was formed into a sheet in a sheet-forming machine. Following sheet formation, the wet nonwoven fabric was transferred from the sheet-forming machine onto a cylindrical folding machine capable of folding in nested fashion. It was then folded up into a concentric circular pleat shape and dried at 90 to 160°C to fabricate a filter.

The number of pleats, pleat height, and outer diameter of the pleat at the outermost circumference position were varied by changing the folding machine employed. The filter thickness was adjusted by means of the slurry concentration.

[Comparative Example 1]

With the exception that short fiber A-1 and fiber B-2 were employed without a fiber corresponding to fiber C, a slurry 3 was prepared by the same method as in the above Examples. The concentration of the solid component in slurry 3 that was prepared was about 0.3 mass percent.

Using slurry 3 thus prepared, an attempt was made to fabricate a filter by folding up into a concentric circular pleat form by the same method as in the above Examples. Although an attempt was made following drying to remove the filter from the folding machine, it stuck firmly to the folding machine and ended up having to be peeled off, precluding the obtaining of a filter.

[Comparative Examples 2 to 4]

Quantities of glass fiber and fiber B-3 corresponding to a single filter were weighed out, charged with a suitable quantity of water to a mixer, and stirred to prepare slurry 4. The concentration of the solid component in slurry 4 thus obtained was about 0.1 to 0.5 mass percent.
A filter was fabricated by the same method as in the above Examples from slurry 4 thus prepared.

[Comparative Examples 5 to 9]

A slurry 5 was prepared from the combination of fibers shown in Table 2 by the same method as in Examples 1 to 9. The concentration of the solid component in slurry 5 thus obtained was about 0.5 to 0.7 mass percent.
Slurry 5 thus prepared was used to form a sheet on a round net, peeled off the net, and dried at 90 to 160°C to prepare a sheet-like filter. The thickness of the filter was adjusted by means of the slurry concentration.

Evaluation methods

(1) DOP particle filtration efficiency

The DOP particle filtration efficiency of the filter fabricated in Examples and Comparative Examples was measured by the following method with an Automated Filter Tester Model 8130 made by TSI.
The concentration of dioctyl phthalate was measured before and after passing air containing particles of dioctyl phthalate (DOP) with a median diameter of the particle distribution of 0.15 to 0.25 $\mu$m (geometric standard deviation of $\leq 1.6$ $\mu$m) and a 100 mg/m$^3$ concentration through the filter at a flow rate of 85 L/min, and the DOP-trapping efficiency was calculated based on the following expression:

$$\text{(DOP concentration after passage of sample)/(DOP concentration before passage of sample)} \times 100 \text{ percent}$$

(2) Pressure loss

Air was passed through the filters fabricated in Examples and Comparative Examples at a rate of 30 L/min and the pressure differential before and after passage of the sample was measured as the pressure loss.

[Table 1]

| No. | Composition (mass%) | | | | | | Fiber B+ Fiber C | Glass fiber | Thickness (mm) | Number of pleats | Pleat portion outer diameter (mm) | Pleat portion height (mm) |
|---|---|---|---|---|---|---|---|---|---|---|---|---|
| | Corresponding to short fiber A | Corresponding to fiber B | | | Corresponing to fiber C | | | | | | | |
| | Short fiber A-1 | Fiber B-1 | Fiber B-2 | Fiber B-3 | Fiber C-1 | Fiber C-2 | | | | | | |
| Fiber diameter | 703nm | 6.8 $\mu$m | 10.1 $\mu$m | 12.5 $\mu$m | 2.4 $\mu$m | 5.2 $\mu$m | - | - | | | | |
| Fiber length | 0.8 mm | 5 mm | 5 mm | 5 mm | 3 mm | 3 mm | - | - | | | | |
| Ex.1 | 27 | - | 55 | - | - | 18 | 73 | - | 0.8 | 6 | 61 | 17 |
| Ex.2 | 22 | - | 39 | - | - | 39 | 78 | - | 1 | 6 | 61 | 17 |
| Ex.3 | 22 | 45 | - | - | 11 | 22 | 78 | - | 0.5 | 9 | 68 | 19 |
| Ex.4 | 26 | 43 | - | - | 10 | 21 | 74 | - | 0.6 | 9 | 68 | 19 |
| Ex.5 | 30 | 40 | - | - | 10 | 20 | 70 | - | 0.6 | 9 | 68 | 19 |
| Ex.6 | 32 | 39 | - | - | 10 | 19 | 68 | - | 0.6 | 9 | 69 | 19 |
| Ex.7 | 34 | 38 | - | - | 9 | 19 | 66 | - | 0.7 | 9 | 69 | 19 |
| Ex.8 | 35 | 37 | - | - | 9 | 19 | 65 | - | 0.8 | 12 | 79 | 22 |
| Ex.9 | 42 | 33 | - | - | 8 | 17 | 58 | - | 1 | 12 | 79 | 22 |
| Comp.Ex.1 | 33 | - | 67 | - | - | - | 67 | - | Fabrication couldn't be done. | | | |
| Comp.Ex.2 | - | - | - | 44 | - | - | 44 | 56 | 0.9 | 6 | 66 | 17 |
| Comp.Ex.3 | - | - | - | 39 | - | - | 39 | 61 | 0.7 | 9 | 72 | 19 |
| Comp.Ex.4 | - | - | - | 40 | - | - | 40 | 60 | 0.6 | 12 | 61 | 9 |

[Table 2]

| No. | Composition (mass%) | | | | | Thickness (mm) | Diameter (mm) |
|---|---|---|---|---|---|---|---|
| | Corresponding to short fiber A | Corresponding to fiber B | Corresponding to fiber C | | Fiber B+ Fiber C | | |
| | Short fiber A-1 | Fiber B-1 | Fiber C-1 | Fiber C-2 | | | |
| Fiber diameter | 703 nm | 6.8 $\mu$m | 2.4 $\mu$m | 5.2 $\mu$m | - | | |
| Fiber length | 0.8 mm | 5 mm | 3 mm | 3 mm | - | | |
| Comp.Ex.5 | 22 | 45 | 11 | 22 | 78 | 0.8 | 80 |
| Comp.Ex.6 | 26 | 43 | 10 | 21 | 74 | 1 | 80 |
| Comp.Ex.7 | 30 | 40 | 10 | 20 | 70 | 0.5 | 80 |
| Comp.Ex.8 | 32 | 39 | 10 | 19 | 68 | 0.6 | 80 |
| Comp.Ex.9 | 34 | 38 | 9 | 19 | 66 | 0.6 | 80 |

[Table 3]

| No. | Shape | Number of pleats | DOP filtration efficiency (%) | Pressure loss (Pa) | Mass (g) | Mass per unit area (g/m$^2$) |
|---|---|---|---|---|---|---|
| Ex. 1 | Concentric circular pleat form | 6 | 99.659 | 157 | 2.54 | 113.0 |
| Ex.2 | | | 99.986 | 217 | 3.59 | 159.7 |
| Ex.3 | | 9 | 99.842 | 81 | 3.39 | 94.0 |
| Ex.4 | | | 99.949 | 102 | 3.62 | 100.1 |
| Ex.5 | | | 99.983 | 139 | 3.84 | 105.0 |
| Ex.6 | | | 99.992 | 148 | 3.92 | 106.6 |
| Ex.7 | | | 99.998 | 179 | 4.16 | 113.0 |
| Ex.8 | | 12 | 99.997 | 128 | 8.29 | 134.6 |
| Ex.9 | | | 99.999 | 132 | 9.72 | 157.9 |
| Comp.Ex.1 | | 9 | Measurement couldn't be done. | | - | - |
| Comp.Ex.2 | | 6 | 99.992 | 157 | 1.95 | 87 |
| Comp.Ex.3 | | 9 | 99.979 | 144 | 3.29 | 146 |
| Comp.Ex.4 | | 12 | 99.924 | 83 | 3.82 | 112 |
| Comp.Ex.5 | Single sheet | - | 99.155 | 435 | 0.62 | 97 |
| Comp.Ex.6 | | | 99.579 | 514 | 0.66 | 104 |
| Comp.Ex.7 | | | 99.849 | 626 | 0.69 | 109 |
| Comp.Ex.8 | | | 99.893 | 681 | 0.71 | 111 |
| Comp.Ex.9 | | | 99.971 | 830 | 0.77 | 121 |

Evaluation results

As set forth above, in Comparative Example 1, in which an attempt was made to fabricate a filter by folding up into a concentric circular pleat form without employing a fiber corresponding to fiber C, no filter could be obtained. In contrast, in Examples 1 to 9, filters of desired shapes having concentric circular pleats were successfully fabricated. As shown in Table 3, all of the filters of Examples had DOP particle-trapping efficiencies exceeding 99 percent, indicating an extremely good particle-trapping capacity. A comparison with the single sheet-like filters of Comparative Examples 5 to 9 confirmed that the use of a concentric circular pleat shape achieved both high particle filtration efficiency and a low pressure loss. Further, comparison with Comparative Examples 2 to 4 revealed that Examples 1 to 9 yielded filters made of synthetic fibers affording filter performance (particle filtration efficiency and pressure loss) equivalent to or better than that of filters employing glass fiber. When the filters in which glass fiber was employed were incinerated, the glass remained as a residue in the waste product. By contrast, since the synthetic fiber filters could be completely incinerated, they were desirable from an environmental perspective. Further, since glass fiber is brittle and is not of constant fiber diameter, it tends not to provide a stable filter of constant quality. In contrast, since synthetic fibers readily yield both uniform fiber diameters and fiber lengths, the use of the synthetic fibers makes it possible to stably provide filters of desired performance.

The present invention is useful in fields such as the manufacturing of replaceable dust mask filters.

**Claims**

1. A mask filter, wherein wet nonwoven fabric comprised of synthetic fiber is folded up into a concentric circular pleat form, and
   the synthetic fiber comprises:

   10 to 50 mass percent of short fiber A having a fiber length ranging from 0.1 to 1 mm and a fiber diameter ranging from 100 to 1,000 nm,

   and further comprises:

   binder fiber B having a fiber length ranging from 5 to 10 mm and a fiber diameter ranging from 6 to 15 $\mu$m, and fiber C of greater fiber length and fiber diameter than short fiber A and smaller fiber length and fiber diameter than binder fiber B.

2. The mask filter according to claim 1, wherein the synthetic fiber comprises 50 to 90 mass percent of a total quantity of binder fiber B and fiber C.

3. The mask filter according to claim 1, which has a DOP particle filtration efficiency of equal to or greater than 80 percent and a pressure loss of equal to or less than 300 Pa.

4. The mask filter according to claim 1, which has a mass per unit area of 80 to 180 g/m$^2$.

5. The mask filter according to claim 1, which has a filter thickness ranging from 0.4 to 1.5 mm, a pleat height ranging from 5 to 30 mm, a pleat outer diameter at the outermost circumference position ranging from 50 to 120 mm, and a total number of pleats ranging from 6 to 15.

6. The mask filter according to claim 1, which has a total weight ranging from 2 to 12 g.

7. The mask filter according to claim 1, wherein the short fiber A is a polyester fiber.

8. The mask filter according to claim 1, wherein the binder fiber B is a core-in-sheath composite fiber with a core portion of polyethylene terephthalate and a sheath portion of copolymer polyester.

9. The mask filter according to claim 1, wherein the fiber C is a polyester fiber.

10. A method of manufacturing the mask filter according to any of claims 1 to 9, which comprises folding up the nonwoven fabric into a concentric circular pleat form while in a wet state.

**11.** A particle-trapping mask comprising the mask filter according to any of claims 1 to 9.

[Fig.1]

[Fig. 2]

Head band 10

Holder 3

Inhalation valve 6

Cap 2   Face-contact member 4

Filter (filter
element) 1

Strap-fastening
mount 7

Knob 31

Buckle 9

Packing 32

Strap fastener 8

Exhalation
valve 5

<center>**INTERNATIONAL SEARCH REPORT**</center>

| | International application No. |
|---|---|
| | PCT/JP2011/067760 |

A. CLASSIFICATION OF SUBJECT MATTER
*A62B18/02*(2006.01)i, *A62B7/10*(2006.01)i, *B01D39/16*(2006.01)i, *D04H1/72*
(2006.01)i, *D21H13/24*(2006.01)i, *D21H15/02*(2006.01)i, *D21H27/08*(2006.01)i

According to International Patent Classification (IPC) or to both national classification and IPC

B. FIELDS SEARCHED

Minimum documentation searched (classification system followed by classification symbols)
A62B18/02, A62B7/10, B01D39/16, D04H1/72, D21H13/24, D21H15/02, D21H27/08

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2008/130019 A1 (Teijin Fibers Ltd.), 30 October 2008 (30.10.2008), pages 1, 3 to 5, 8 to 11 & US 2010/0133173 A1    & EP 2138634 A1 & CN 101680185 A         & KR 10-2010-0016585 A | 1-11 |
| Y | JP 55-47929 B2 (Koken Ltd.), 03 December 1980 (03.12.1980), entire text; fig. 1 (Family: none) | 1-11 |
| Y | JP 2000-288105 A (Koken Ltd.), 17 October 2000 (17.10.2000), paragraphs [0010], [0011]; fig. 1, 2 (Family: none) | 1-11 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 24 August, 2011 (24.08.11) | Date of mailing of the international search report 06 September, 2011 (06.09.11) |
|---|---|
| Name and mailing address of the ISA/ Japanese Patent Office | Authorized officer |
| Facsimile No. | Telephone No. |

Form PCT/ISA/210 (second sheet) (July 2009)

<center>15</center>

**INTERNATIONAL SEARCH REPORT**

International application No.

PCT/JP2011/067760

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-282373 A  (Shigematsu Works Co., Ltd.), 02 October 2002 (02.10.2002), paragraph [0005]; all drawings & EP 1243291 A1        & DE 60218238 D & DE 60218238 T | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010186867 A
- JP 55047929 A
- WO 2008130019 A1
- US 20100133173 A1